# EUROPÄISCHE PATENTANMELDUNG

(11) **EP 4 357 274 A1**
(43) Veröffentlichungstag der Anmeldung: **24.04.2024**
(21) Anmeldenummer: 23200210.5
(22) Anmeldetag: 27.09.2023
(51) Int. Cl.: B65G 43/02, B65G 47/86

(54) **VORRICHTUNG ZUM TRANSPORTIEREN VON BEHÄLTNISSEN MIT SENSOR ZUR POSITIONSÜBERWACHUNG**

(30) Priorität: 19.10.2022 DE 102022127522
(71) Anmelder: Krones AG, 93073 Neutraubling (DE)
(72) Erfinder: Habenschaden, Nina, 93073 Neutraubling (DE); Effenberger, Harald, 93073 Neutraubling (DE); Hoellriegl, Thomas, 93073 Neutraubling (DE)
(74) Vertreter: Bittner, Bernhard

(57) **Zusammenfassung**

Vorrichtung (1) zum Transportieren von Behältnissen mit einem beweglichen und insbesondere drehbaren Träger (4), welcher eine Vielzahl von wechselbaren Halteeinrichtungen (6) zum Halten der Behältnisse während des Transports aufweist, wobei die Vorrichtung (1) wenigstens eine Sensoreinrichtung (8) aufweist, welche eine Position der Halteeinrichtung (6), insbesondere nach einem Wechsel der Halteeinrichtungen (6), erfasst und/oder überwacht. Erfindungsgemäß weist die Vorrichtung (1) eine Zuordnungseinrichtung (26) auf, welche wenigstens einer und bevorzugt jeder Halteeinrichtung (6) wenigstens einen durch die wenigstens eine Sensoreinrichtung (8) erfassten Messwert zuordnet.

## Beschreibung

Die vorliegende Erfindung bezieht sich auf eine Vorrichtung und ein Verfahren zum Transportieren von Behältnissen. Innerhalb einer Anlage zum Behandeln von Behältnissen werden die Behältnisse üblicherweise von mehrere Behandlungseinrichtungen behandelt, wobei die Übergabe bzw. der Transport von einer Behandlungseinrichtung an eine andere, insbesondere nachfolgende Behandlungseinrichtung mittels Transporteinrichtungen/Transporträdern erfolgt.

Diese Transporteinrichtungen weisen dabei Halteeinrichtungen zum Halten der Behältnisse auf, wobei die Behältnisse insbesondere von einer Halteeinrichtung der Transporteinrichtung an eine Halteeinrichtung einer Behandlungseinrichtung übergeben werden. Da diese Übergabe bei sehr hoher Geschwindigkeit erfolgt, ist eine exakte Einstellung der Halteeinrichtungen und insbesondere auch der Halteeinrichtungen zueinander erforderlich, um Beschädigungen der Behältnisse und/oder der Halteeinrichtungen oder Kollisionen zwischen den Halteeinrichtungen zu vermeiden. Es ist daher auch notwendig, die Übergabepunkte regelmäßig zu überprüfen.

In einer Behälterbehandlungsmaschine ist dabei eine Vielzahl an Handling-Systemen für Behältnisse, wie Flaschen, Dosen oder Preforms vorhanden. Meist werden für PET-Streckblasmaschinen Neckhandling-Systeme mit Transfersternen oder Linear-TransferSystem eingesetzt, die mit Greifern oder Klammern ausgestattet sind. Bei einem Produktwechsel werden die Greifer oder Klammern dabei meist mit Schnellwechselsystemen getauscht und nur optisch vor Anfahren der Maschine geprüft. Tritt in diesem Zusammenhang nach dem Wechseln ein Problem mit der Justage des Greifersystems auf, wird im internen Stand der Technik der Anmelderin mit Hilfsmitteln, z.B. Messuhr, Messschieber oder Fühlerlehre, nachjustiert.

Eine derartige Vorgehensweise ist jedoch nachteilig, da es beim Wechseln der Greifersysteme durch das Bedienpersonal zu Fehlern beim Einrichten oder der Justage der Einheiten kommen kann. Die Fehler werden jedoch erst beim Anfahren der Maschine bemerkt und die Maschine muss teilweise leer gefahren werden, um die Greifersysteme nachjustieren zu können. Sollte sich erst im Betrieb eine Einheit lockern oder verstellen, wird dies meist zu spät bemerkt und es kommt zu einer Störung oder Produktionsausfall durch defekte oder beschädigte Teile.

Aus der WO 2020/128405 A1 ist beispielsweise eine Vorrichtung bekannt, bei welcher mit einem Abstandssensor ein Abstand zweier Backen einer Klammer zu einem festen Referenzpunkt gemessen wird und hieraus auf die Position der Klammer geschlossen wird.

Der vorliegenden Erfindung liegt daher die Aufgabe zugrunde, eine Vorrichtung und ein Verfahren bereitzustellen, mit welcher / mit welchem eine vereinfachte und zuverlässige Positionsüberwachung der Halteeinrichtungen ermöglicht wird. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Vorrichtung zum Transportieren von Behältnissen gerichtet, mit einem beweglichen und insbesondere drehbaren Träger, welcher eine Vielzahl von wechselbaren Halteeinrichtungen zum Halten der Behältnisse während des Transports aufweist, wobei die Vorrichtung wenigstens eine Sensoreinrichtung aufweist, welche eine Position der Halteeinrichtung, insbesondere nach einem Wechsel der Halteeinrichtungen, erfasst und/oder überwacht.

Erfindungsgemäß weist die Vorrichtung eine Zuordnungseinrichtung auf, welche wenigstens einer und bevorzugt jeder Halteeinrichtung wenigstens einen durch die wenigstens eine Sensoreinrichtung erfassten Messwert zuordnet.

Die Zuordnung kann dabei bevorzugt in geeigneter Weise erfolgen.

Eine Möglichkeit ist dabei beispielsweise durch die Definition oder Festlegung eines Nullpunktes. Beispielsweise kann dieser Nullpunkt an einer Antriebseinrichtung bzw. einem Motor des Trägers festgelegt werden, wodurch eine direkte Zuordnung zu einer Halteeinrichtung erfolgen kann, dass sich in diesem Nullpunkt befindet. Alle weiteren Halteeinrichtungen sind dann nachfolgend definierbar.

Eine weitere Möglichkeit der Zuordnung ist beispielsweise an einer Halteeinrichtung (meistens die Halteeinrichtung mit der Zuordnung Nr.1) ein zusätzliches Element anzubringen, welches bevorzugt mit einer weiteren Sensoreinrichtung, wie beispielsweise einen induktiven Sensor, detektiert werden kann. Diese Halteeinrichtung dient somit als Referenz-Halteeinrichtung. Die weitere Sensoreinrichtung befindet sich dabei bevorzugt an der gleichen Stelle wie die Messeinrichtung mit der ersten Sensoreinrichtung, so dass durch das Signal festgestellt werden kann, wann die Referenz-Halteeinrichtung gemessen wird und somit die Zuordnung stattfinden kann. Das zusätzliche Element an der Halteeinrichtung kann zum Beispiel einfach eine höhere Schraube sein. So kann nach jeder Umdrehung detektiert werden, wann die Referenz-Halteeinrichtung wieder vorbeigekommen ist. Alle weiteren Zuordnungen erfolgen dann jeweils aufsteigend nach Anordnung der Halteeinrichtungen.

Die erfassten Messwerte und zu welcher Halteeinrichtung diese gehören, kann dabei bevorzugt an einer Anzeigeeinrichtung ausgegeben werden, so dass ein Anlagenbediener die Werte überprüfen und kontrollieren kann. Die Messwerte werden bevorzugt kontinuierlich während des Betriebs aufgenommen und überprüft. Messwerte, welche nicht den Sollwerten entsprechen, können dabei beispielsweise durch eine andere Farbe oder dergleichen an der Anzeige dargestellt werden, so dass die entsprechenden abweichenden Werte direkt ersichtlich sind und die defekten Teile getauscht werden können.

Es wird demnach erfindungsgemäß vorgeschlagen, wenigstens eine Sensoreinrichtung vorzusehen, welche eine Position der Halteeinrichtungen erfasst und zudem eine Zuordnung vorzunehmen, so dass identifiziert werden kann, welcher Messwert an welcher Halteeinrichtung erfasst wurde.

Durch die vorgeschlagene Erfindung wird demnach der Wechsel und das anschließende Einrichten der Halteeinrichtungen erleichtert, wobei insbesondere zum Einrichten der neuen Halteeinrichtungen keine zusätzlichen Messmittel notwendig sind. Auch eine Zeitersparnis beim Wechseln und Einrichten der Halteeinrichtungen kann hierdurch erreicht werden. Dabei kann auch nach dem Wechseln und wieder anfahren einer Maschine nach einem Stillstand eine Überwachung der Einstellung vorgenommen werden, so dass auch eine einfache Erkennung von Defekten oder Verschleiß an einzelnen Halteeinrichtungen erkannt werden kann. Zusätzlich kann beispielsweise auch über die Dicke der Halteeinrichtung, insbesondere Klammer, überprüft werden, ob die richtige Halteeinrichtung verbaut wurde. Je nach Kundenobjekt (Preform/Flasche) werden unterschiedliche Halteeinrichtungen verwendet, die je nach Mundstück eine unterschiedliche Form besitzen. Für unterschiedliche Halteeinrichtungen mit gleicher Dicken könnte zum Beispiel eine individuelle Ausfräsung oder ein Code angebracht werden, damit eine Zuordnung erfolgen kann. Somit kann bevorzugt die Dicke der Halteeinrichtung oder eine individuelle Markierung gemessen werden und in der Steuerung abgeglichen werden, welche Halteeinrichtung beim verwendeten Kundenobjekt eingesetzt werden muss.

Vorteilhaft kann die vorgeschlagene Vorrichtung bei Kundenwunsch auch als externe Auswerteeinheit als Nachrüstlösung verbaut werden.

Bei der Vorrichtung zum Transportieren von Behältnissen handelt es sich bevorzugt um eine Transporteinrichtung mit einem drehbaren Träger und einer im Wesentlichen kreisförmigen Transportbahn entlang derer die Behältnisse transportiert werden. Im Wesentlichen bedeutet dabei, dass die Kreisbahn auch um wenige Grad, beispielsweise ± 5° von der Kreisbahn abwichen kann.

Die Halteeinrichtungen sind dabei bevorzugt in regelmäßigen Abständen an einem Umfang des Trägers angeordnet. Alternativ könnten die Halteeinrichtungen auch in unregelmäßigen Abständen angeordnet sein. Bevorzugt sind die Halteeinrichtung fixiert (stationär) oder schwenkbar angeordnet. Bevorzugt sind die Halteeinrichtungen schwenkbar an dem Träger der Transporteinrichtung angeordnet. Vorteilhaft halten die Halteeinrichtungen die Behältnisse an deren Umfang, wobei die Halteeinrichtungen den Umfang der Behältnisse um wenigstens 270°, bevorzugt um wenigstens 250°, bevorzugt um wenigstens 220° und besonders bevorzugt um wenigstens 180° umgeben. Die Halteeinrichtungen halten die Behältnisse dabei bevorzugt unterhalb oder oberhalb des Tragrings.

Bei den Halteeinrichtungen handelt es sich bevorzugt um Greifeinrichtungen oder Klammern. Dabei wird bevorzugt auch eine Überprüfung vorgenommen, ob die Messwerte innerhalb vorgegebener Werte liegen oder mit Sollwerten übereinstimmen und damit die Halteeinrichtungen eine vorgegebene oder festgelegte Position aufweisen und zusätzlich ob die richtigen Halteeinrichtungen verwendet werden. Hierzu weist die Vorrichtung bevorzugt eine Auswerte- und/oder Steuerungseinrichtung auf, welche die Messwerte entsprechend, beispielswiese durch Vergleich mit Sollwerten, auswertet.

Durch die oben erwähnte Zuordnung ist dabei insbesondere eine Identifikation möglich, welche Halteeinrichtung beispielsweise fehlerhaft ist bzw. in nicht ordnungsgemäßer Position angeordnet ist. Anhand der wenigstens einen Sensoreinrichtung wird somit eine automatisierte Überprüfung und/oder Überwachung der Position der einzelnen Halteeinrichtungen ermöglicht.

Bevorzugt sind dabei in jeder in der Gesamtanlage enthaltenen Vorrichtung zum Transportiren von Behältnissen Sensoreinrichtungen zur Positionsermittlung integriert, um eine vorher ermittelte oder festgelegte Position zu überprüfen. Bei der Vorrichtung zum Transportieren handelt es sich dabei vorteilhaft um einen Transferstern.

Mit der wenigstens einen Sensoreinrichtung kann demnach beispielsweise eine Höhenabweichung der Halteeinrichtung im Verlauf bzw. im Umfang der Transporteinrichtung und zueinander gemessen werden. Bevorzugt werden dabei an der Vorrichtung selbst und/oder der Umgebung der Vorrichtung ein oder mehrere Messpunkte festgelegt, welche als Referenzpunkte für die Messungen dienen.

Mit einer weiteren Sensoreinrichtung kann bevorzugt auch eine Dicke der Halteeinrichtung bzw. Klammer gemessen werden. Dabei misst bevorzugt ein erster Sensor die Position der Halteeinrichtung von unten und ein zweiter Sensor die Position von oben. Somit kann gemessen werden, ob die richtige Klammer für das entsprechende Kundenobjekt eingesetzt ist. Beispielsweise bei einer Initialrunde vor Produktionsstart können dann diese Werte abgeglichen werden. Somit kann verhindert werden, dass Kollisionen durch falsche Halteelemente auftreten.

Die erfassten Messwerte werden dabei manuell notiert oder vorzugsweise bei der Sortenwahl in der Maschinensteuerung mit abgespeichert und angezeigt. So hat auch der Maschinenbediener eine Kontrolle darüber inwieweit die richtigen Halteeinrichtungen oder z.B. die richtige Höhe jeder einzelnen Halteeinrichtung eingestellt ist. Auch bei Produkterweiterung können die neuen Halteeinrichtungen auf jeder Transporteinrichtung bevorzugt ohne zusätzliche Messmittel genau einjustiert werden.

Bei einer bevorzugten Ausführungsform weist die Vorrichtung eine Vielzahl von Sensoreinrichtungen auf. Dabei kann durch Abfrage der Sensoreinrichtungen jeder einzelnen Halteeinrichtung ein Messwert zugeordnet werden. Durch die Vielzahl von Sensoreinrichtungen kann daher die Position jeder einzelnen Halteeinrichtung nach einem Produktwechsel genau überprüft werden.

Bevorzugt sind die Sensoreinrichtungen vom Erdmittelpunkt aus betrachtet unterhalb den Halteeinrichtungen angeordnet. Denkbar ist allerdings auch, dass die Sensoreinrichtungen vom Erdmittelpunkt aus betrachtet oberhalb der Halteeinrichtungen angeordnet sind.

Bevorzugt ist dabei jeder Halteeinrichtung eine eigene Sensoreinrichtung zugeordnet. Bevorzugt wird die Vielzahl von Sensoreinrichtungen dabei mit den Halteeinrichtungen mitbewegt. Die Sensoreinrichtungen sind dabei bevorzugt an einem unter- oder oberhalb der Halteeinrichtungen angeordneten Träger angeordnet, welcher bevorzugt drehbar ausgebildet ist und auf diese Weise mit dem Träger der Transporteinrichtung und demnach den Halteeinrichtungen mitbewegt wird.

Ist jeder Halteeinrichtung eine eigene Sensoreinrichtung zugeordnet, wird auch die Zuordnung der Messergebnisse zu der entsprechenden Halteeinrichtung vereinfacht, da beispielsweise bekannt ist, welcher Sensor zu welcher Halteeinrichtung gehört und demnach den Messwert an der jeweiligen Halteeinrichtung erfasst hat. Die Zuordnung des Messwerts zu der Halteeinrichtung erfolgt in diesem Fall durch die direkte Zuordnung der Sensoreinrichtung zu der jeweiligen Halteeinrichtung, so dass auch der Messwert direkt der Halteeinrichtung zuordenbar ist.

Die Position der Halteeinrichtungen wird dabei bevorzugt vor einem Produktionsstart erfasst, wenn die Halteeinrichtungen bevorzugt keine Behältnisse halten. Somit kann, beispielsweise nach einem Wechsel der Halteeinrichtungen, bei einer Abweichung der Einstellung der Halteeinrichtungen, vor dem Anfahren bevorzugt eine Meldung von einer Maschinensteuerung ausgegeben werden, um Schäden an Bauteilen zu vermeiden. Bevorzugt ist jedoch auch eine Erfassung der Messwerte während der Produktion möglich, wenn die Halteeinrichtungen entsprechend Behältnis aufgenommen haben.

Die Sensoreinrichtungen sind dabei bevorzugt dauerhaft aktiv und Messen bzw. Erfassen stetig die Position der Halteeinrichtungen. Vorteilhaft wird der Messwert in bestimmten Zeitabständen erfasst.

Bevorzugt kann die Vorrichtung auch eine Vielzahl von Sensoreinrichtungen aufweisen, jedoch nicht jeder Halteeinrichtung eine eigene Sensoreinrichtung zugeordnet sein. In dieser Ausführungsform ist die Vielzahl von Sensoreinrichtungen bevorzugt stationär an der Vorrichtung angeordnet und bevorzugt fest mit der Vorrichtung verbaut, wobei auch hierzu wiederum unter- oder oberhalb der Halteeinrichtungen ein Träger vorgesehen sein kann, an welchem die Sensoreinrichtungen angeordnet sind. Die Zuordnungseinrichtung ordnet dabei den jeweilig erfassten Messwert der entsprechenden Halteeinrichtung zu, so dass eine falsch positioniert Halteeinrichtung identifiziert werden kann. Bevorzugt wird auf einer Anzeigeeinrichtung ausgegeben, welcher Messwert an welcher Halteeinrichtung gemessen wurde. Die Halteeinrichtungen selbst weisen eindeutige Nummern, Barcodes oder dergleichen auf, um identifiziert werden zu können. Vorteilhaft gibt die Anzeigeeinrichtung eine bildliche Darstellung aus, welche der Halteeinrichtungen eine falsche oder abweichende Position hat.

Vorteilhaft sind die Sensoreinrichtungen dabei nur einem bestimmten (Winkel)Bereich der Vorrichtung angeordnet, beispielsweise einem Bereich der Transporteinrichtung, in welchem die Halteeinrichtungen keine Behältnisse halten.

Die Sensoreinrichtungen sind bevorzugt aus einer Gruppe von Sensoreinrichtungen ausgewählt, welche Abstandssensoren, Positionssensoren, Lagesensoren, optische Sensoren, elektromagnetische Sensor oder dergleichen enthält. Besonders bevorzugt wird die Position der Halteeinrichtungen berührungslos erfasst. Die Sensoreinrichtung sendet dabei bevorzugt ein elektromagnetisches, optisches oder akustisches Signal aus, welches bevorzugt von einer Erfassungseinrichtung aufgenommen wird und an die oben erwähnte Anzeigeeinrichtung oder eine Auswerteeinrichtung weitergeleitet wird.

Der von der Sensoreinrichtung erfasste Messwert ist dabei beispielsweise ein Wert, ein Abstand oder eine Höhe zwischen einem vorgegebenen Punkt an der Halteeinrichtung und einem festgelegten Bezugspunkt, wobei der Bezugspunkt bevorzugt die Sensoreinrichtung bzw. der Einbauort der Sensoreinrichtung sein kann. Befindet sich der Messwert dabei innerhalb von vorgegebenen Werten bzw. Bereichen oder Sollwerten ist die Position der Halteeinrichtung bevorzugt korrekt. Unter- oder überschreitet der Messwert die vorgegebenen Werte oder Bereiche ist die Position nicht korrekt, was zu einem Fehler und/oder einer Beschädigung bei der Übergabe führen könnte.

Die Sensoreinrichtungen sind dabei bevorzugt unterhalb der Halteeinrichtungen bzw. der Vorrichtung angeordnet und/oder seitlich zu den Halteeinrichtungen. Die Sensoreinrichtung erfasst dabei bevorzugt einen Abstand der Halteeinrichtung zu dem Sensor. Bei stationären Sensoreinrichtungen wird dieser Abstand erfasst während die Halteeinrichtung den Sensor passiert. Bevorzugt wird dabei ein Abstand zwischen der Halteeinrichtung und der Sensoreinrichtung in vertikaler Richtung erfasst. Entspricht dieser Abstand nicht vorgegebenen Sollwerten, befindet sich die Halteeinrichtung nicht in der korrekten Position.

Bei einer seitlichen Anordnung der Sensoreinrichtung wird entsprechend ein Abstand zwischen der Sensoreinrichtung und der Halteeinrichtung in horizontaler Richtung erfasst. Bevorzugt weist die Vorrichtung bevorzugt wenigstens zwei Sensoreinrichtung zur Positionserfassung auf, welche die Position einer Halteeinrichtung in vertikaler und horizontaler Richtung erfasst. Bevorzugt können dabei auch jeder Halteeinrichtung zwei Sensoreinrichtungen zugeordnet sein.

Bei einer bevorzugten Ausführungsform weist die Vorrichtung eine Steuerungseinrichtung auf, welche dazu geeignet und bestimmt ist, die Position der Halteeinrichtungen in Abhängigkeit des erfassten Messwerts anzupassen. Bei dieser Anpassung handelt es sich bevorzugt um ein Nachregeln der Position der Halteeinrichtung. Durch die Integrierung in die Maschinensteuerung ist ein komplettes Monitoring jeder einzelnen Einheit bzw. Halteeinrichtung möglich und dadurch eine Überwachung der Maschine. Gibt es eine Abweichung der Position (Höhe, Timing, etc.) kann ein Stopp erfolgen oder, wenn technisch gegeben, auch automatisch nachjustiert werden. Bevorzugt können auf diese Weise auch fehlende Halteeinrichtungen detektiert werden.

Die Steuerungseinrichtung passt die Position der Halteeinrichtungen dabei insbesondere an, wenn der erfasste Messwert darauf schließen lässt, dass die Position einer Halteeinrichtung nicht mit einer vorgegebener bzw. festgelegter Position oder einem Sollwert übereinstimmt. Die Sensoreinrichtung sind bevorzugt dazu geeignet und bestimmt, die erfassen Messwerte an die Steuerungseinrichtung zu übermitteln. Bevorzugt regelt die Steuerungseinrichtung regelt die Position der Halteeinrichtung in Abhängigkeit eines Ergebnisses einer Vergleichseinrichtung, welche den erfassten Messwert mit gespeicherten Sollwerten vergleicht.

Bei einer bevorzugten Ausführungsform weist die Steuerungseinrichtung daher eine Speichereinrichtung auf, in welcher eine Vielzahl von Sollwerten gespeichert ist.

Bei einer weiteren bevorzugten Ausführungsform handelt es sich bei der Speichereinrichtung um eine Cloud. Die Speichereinrichtung ist daher bevorzugt eine nicht-flüchtige Speichereinrichtung, bevorzugt eine externe Speichereinrichtung und insbesondere eine Cloud-basierte Speichereinrichtung und/oder einen externen Server (inkl. Speichereinrichtung), wobei auf die Speichereinrichtung insbesondere über das Internet (und/oder über ein, insbesondere wenigstens abschnittsweise drahtgebundenes und/oder drahtloses, öffentliches und/oder privates Netzwerk) zugegriffen wird. Unter einem externen Server ist insbesondere ein in Bezug auf eine Behältnisinspektionsvorrichtung (wie die vorliegende Überprüfung der Halteeinrichtungen) externer Server, insbesondere ein Backend-Server, zu verstehen.

Der externe Server ist beispielsweise ein Backend insbesondere eines Behältnisinspektionsvorrichtungs-Herstellers oder eines Diensteanbieters, welcher dazu eingerichtet ist, ortsaufgelöste Sensordaten (insbesondere einer Vielzahl von Sensoreinrichtungen und/oder einer Vielzahl von Behältnisinspektionsvorrichtungen) zu verwalten und/oder Behältnisinspektionsvorrichtungen einzustellen. Die Funktionen des Backend bzw. des externen Servers können dabei auf (externen) Serverfarmen durchgeführt werden. Beim (externen) Server kann es sich um ein verteiltes System handeln.

Bei einer weiteren bevorzugten Ausführungsform weist die Steuerungseinrichtung eine Vergleichseinrichtung auf, welche die erfassten Messwerte mit den in der Speichereinrichtung gespeicherten Sollwerten vergleicht. Bevorzugt wird dabei ein Vergleich mit Sollwerten und /oder vorgegebenen Werten oder Bereichen vorgenommen. Die Sensoreinrichtungen erfassen daher einen Messwert und vergleichen diesen mit gespeicherten Sollwerten.

In einer bevorzugten Ausführungsform weist die Vorrichtung eine Ausgabeeinrichtung auf, welche bei einer durch die Vergleichseinrichtung festgestellten Abweichung der erfassten Messwerte und der abgespeicherten Sollwerte eine Fehlermeldung ausgibt. Die Ausgabeeinrichtung kann bevorzugt auch insbesondere bei einem Sortenwechsel die Messwerte anzeigen, so dass diese bevorzugt von einem Bediener überprüft werden können. Dabei kann vor der Anzeige ein Vergleich in der Vergleichseinrichtung erfolgen und kritische Werte können in der Ausgabeeinrichtung beispielsweise visuell gekennzeichnet werden, so dass diese gleich von unkritischen Werten unterschieden werden können.

Bevorzugt handelt es sich bei der Ausgabeeinrichtung daher um einen Bildschirm, beispielsweise ein Touch-Panel, welcher an der Vorrichtung angeordnet ist. Denkbar wäre bevorzugt auch eine Signalleuchte, welche aufleuchtet, wenn der Messwert nicht den vorgegebenen Sollwerten entspricht. Bevorzugt wird dabei eine akustische oder optische Warnmeldung an den Bediener ausgegeben, dass die Position einer Halteeinrichtung angepasst werden muss.

Bei einer bevorzugten Ausführungsform erfasst und/oder überwacht die wenigstens eine Sensoreinrichtung die Position der Halteeinrichtungen während der Produktion. Ist jeder Halteeinrichtung eine Sensoreinrichtung zugeordnet kann diese Überwachung bevorzugt dauerhaft aktiv sein. Ist nicht jeder Halteeinrichtung eine eigene Sensoreinrichtung zugeordnet, erfolgt die Überprüfung, wenn die Halteeinrichtungen die bevorzugt stationäre Sensoreinrichtungen passieren. Während der Produktion wird dabei bevorzugt jede in der Vorrichtung befindliche Halteeinrichtung überwacht.

Bei einer weiteren bevorzugten Ausführungsform ist die wenigstens eine Sensoreinrichtung fest an der Vorrichtung angeordnet. Unter einer festen Anordnung wird verstanden, dass die Sensoreinrichtung(en) nicht zerstörungsfrei von der Vorrichtung entfernbar sind. Diese feste Anordnung ist vorteilhat, da hierdurch die Einstellung bzw. Anordnung des Sensors, insbesondere der Abstand zur Halteeinrichtung, nicht versehentlich veränderbar ist. Bevorzugt sind die Sensoreinrichtungen dabei fest an einem Träger angeordnet, der sich ober- oder unterhalb der Transporteinrichtung befindet.

Bei einer weiteren bevorzugten Ausführungsform handelt es sich bei den Sensoreinrichtungen um mobile Sensoreinrichtungen, welche zum Zwecke der Montage lösbar an der Vorrichtung angeordnet werden. Bevorzugt werden die Sensoreinrichtungen demnach zur Anordnung bzw. Einstellung der Halteeinrichtungen an der Vorrichtung angeordnet und anschließend wieder entfernt. Eine derartige Einstellung kann dabei bevorzugt auch bei jedem Wechselvorgang der Halteeinrichtungen erfolgen oder einmalig, bei der Erst-Montage der Vorrichtung.

Die vorliegende Erfindung ist weiter auf ein Verfahren zum Transportieren von Behältnissen entlang eines vorgegebenen Transportpfads gerichtet, wobei die Behältnisse während des Transports an Halteeinrichtungen gehalten werden und mit wenigstens einer Sensoreinrichtung eine Position der Halteeinrichtung erfasst und/oder überwacht wird.

Erfindungsgemäß wird wenigstens einer und bevorzugt jeder Halteeinrichtung wenigstens ein durch die wenigstens eine Sensoreinrichtung erfasster Messwert zugeordnet.

Es wird demnach auch verfahrensseitig vorgeschlagen, wenigstens eine Sensoreinrichtung vorzusehen, welche eine Position der Halteeinrichtungen erfasst und zudem eine Zuordnung vorzunehmen, so dass identifiziert werden kann, welcher Messwert an welcher Halteeinrichtung erfasst wurde.

Bei einem bevorzugten Verfahren werden die erfassten Messwerte mit bevorzugt in einer Cloud abgespeicherten Sollwerten verglichen. Bevorzugt wird wenigstens eine Cloud (als Speichereinrichtung) bzw. wenigstens eine Cloud-basierte Speichereinrichtung bereitgestellt, in welcher die Sollwerte gespeichert sind und die Messwerte abgelegt werden.

Bei einem weiteren bevorzugten Verfahren wird bei einer Abweichung des Vergleichs eine Fehlermeldung ausgegeben. Bevorzugt handelt es sich dabei um eine vom dem Maschinenbediener akustisch oder optisch wahrnehmbare Meldung.

Die oben beschriebene Vorrichtung ist dabei insbesondere dazu eingerichtet und dafür vorgesehen, dieses beschriebene Verfahren durchzuführen, d. h., dass alle für die obig beschriebene Vorrichtung ausgeführten Merkmale ebenso für das hier beschriebene Verfahren offenbart sind und umgekehrt.

Weitere Vorteile und Ausführungsformen ergeben sich aus den beigefügten Zeichnungen. Darin zeigt:
- Fig. 1: eine schematische Darstellung einer erfindungsgemäßen Vorrichtung; und
- Fig. 2: eine Detaildarstellung der in Figur 1 dargestellten erfindungsgemäßen Vorrichtung.

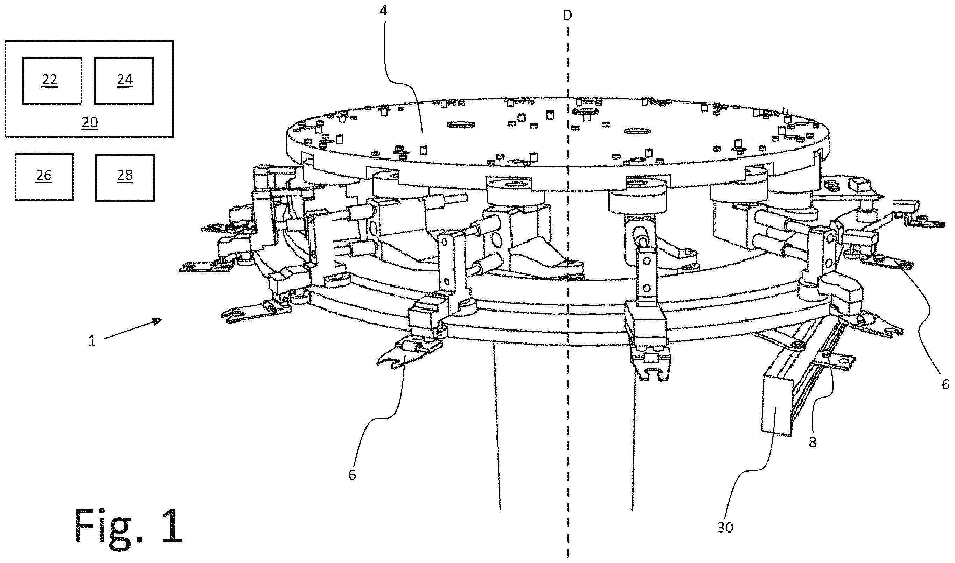

Figur 1 zeigt eine schematische Darstellung einer erfindungsgemäßen Vorrichtung 1. Die Vorrichtung 1 weist dabei einen um die Drehachse D drehbaren Träger 4, an welchem eine Vielzahl von Halteeinrichtungen 6 angeordnet ist, welche (nicht dargestellte) Behältnisse zu während des Transports halten.

Das Bezugszeichen 30 kennzeichnet einen Träger, an welchem eine oder mehrere Sensoreinrichtungen 8 angeordnet sind, welche die Position der Halteeinrichtungen 6 überwachen bzw. erfassen, wenn diese die Sensoreinrichtungen 8 passieren. In der in Figur 3 dargestellten Ausführungsform sind die Sensoreinrichtungen 8 dabei stationär angeordnet. Wie oben beschrieben wäre es allerdings auch denkbar, dass jeder Halteeinrichtung eine eigene Sensoreinrichtung zugeordnet ist und sich diese Sensoreinrichtungen entsprechend mit den Halteeinrichtungen mitbewegen. In diesem Fall würde sich der Träger 30 unterhalb oder oberhalb des gesamten Umfangs der Vorrichtung 1 erstrecken.

Die erfindungsgemäße Vorrichtung 1 ist demnach nicht auf die in Figur 1 dargestellte Ausführungsform beschränkt.

Das Bezugszeichen 20 kennzeichnet schematisch die Steuerungseinrichtung, welche eine Speichereinrichtung 22 zum Speichern von Sollwerten und erfassten Messwerten und eine Vergleichseinrichtung 24 zum Vergleichen der Messwerte mit den gespeicherten Sollwerten aufweist. Das Bezugszeichen 26 bezieht sich auf eine Zuordnungseinrichtung, welche die von den Sensoreinrichtungen 6 erfassten Messwerten den entsprechenden Halteeinrichtungen 8 zuordnet und das Bezugszeichen 28 auf eine Ausgabeeinrichtung, welche Fehlermeldungen oder allgemein die Messwerte ausgibt bzw. anzeigt.

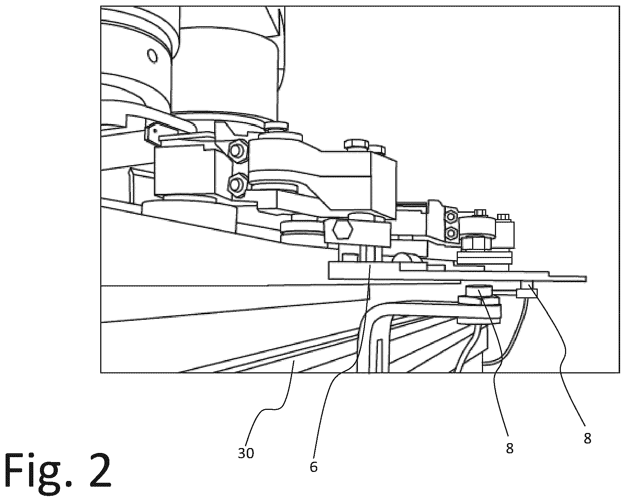

Fig. 2 zeigt eine Detaildarstellung der in Figur 1 dargestellten erfindungsgemäßen Vorrichtung. In dieser Darstellung ist die unterhalb der Halteeinrichtung 8 angeordnete Sensoreinrichtung 6 erkennbar. Bei dieser Sensoreinrichtung 6 kann es sich dabei um eine stationäre oder bewegbare Sensoreinrichtung handeln.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 4: Träger
- 6: Halteeinrichtungen
- 8: Sensoreinrichtung
- 20: Steuerungseinrichtung
- 22: Speichereinrichtung
- 24: Vergleichseinrichtung
- 26: Zuordnungseinrichtung
- 28: Ausgabeeinrichtung
- 30: Träger
- D: Drehachse

## Patentansprüche

1. Vorrichtung (1) zum Transportieren von Behältnissen mit einem beweglichen und insbesondere drehbaren Träger (4), welcher eine Vielzahl von wechselbaren Halteeinrichtungen (6) zum Halten der Behältnisse während des Transports aufweist, wobei die Vorrichtung (1) wenigstens eine Sensoreinrichtung (8) aufweist, welche eine Position der Halteeinrichtung (6), insbesondere nach einem Wechsel der Halteeinrichtungen (6), erfasst und/oder überwacht,
**dadurch gekennzeichnet, dass**
die Vorrichtung (1) eine Zuordnungseinrichtung (26) aufweist, welche wenigstens einer und bevorzugt jeder Halteeinrichtung (6) wenigstens einen durch die wenigstens eine Sensoreinrichtung (8) erfassten Messwert zuordnet.

2. Vorrichtung (1) nach Anspruch 1,
**dadurch gekennzeichnet, dass**
die Vorrichtung (1) eine Vielzahl von Sensoreinrichtungen (8) aufweist.

3. Vorrichtung (1) nach Anspruch 1,
**dadurch gekennzeichnet, dass**
die Vorrichtung (1) eine Steuerungseinrichtung (20) aufweist, welche dazu geeignet und bestimmt ist, die Position der Halteeinrichtungen (6) in Abhängigkeit des erfassten Messwerts nachzuregeln.

4. Vorrichtung (1) nach Anspruch 3,
**dadurch gekennzeichnet, dass**
die Steuerungseinrichtung (20) eine Speichereinrichtung (22) aufweist, in welcher eine Vielzahl von Sollwerten gespeichert ist.

5. Vorrichtung (1) nach Anspruch 4,
**dadurch gekennzeichnet, dass**
es sich bei der Speichereinrichtung (22) um eine Cloud handelt.

6. Vorrichtung (1) nach Anspruch 4,
**dadurch gekennzeichnet, dass**
die Steuerungseinrichtung (20) eine Vergleichseinrichtung (24) aufweist, welche die erfassten Messwerte mit den in der Speichereinrichtung (22) gespeicherten Sollwerten vergleicht.

7. Vorrichtung (1) nach Anspruch 6,
**dadurch gekennzeichnet, dass**
die Vorrichtung (1) eine Ausgabeeinrichtung (28) aufweist, welche bei einer durch die Vergleichseinrichtung (24) festgestellten Abweichung der erfassten Messwerte und der abgespeicherten Sollwerte eine Fehlermeldung ausgibt.

8. Vorrichtung (1) nach Anspruch 1,
**dadurch gekennzeichnet, dass**
die wenigstens eine Sensoreinrichtung (8) die Position der Halteeinrichtungen (6) während der Produktion erfasst und/oder überwacht.

9. Vorrichtung (1) nach Anspruch 1,
**dadurch gekennzeichnet, dass**
die wenigstens eine Sensoreinrichtung (8) fest an der Vorrichtung (1) angeordnet ist.

10. Vorrichtung (1) nach Anspruch 1,
**dadurch gekennzeichnet, dass**
es sich bei den Sensoreinrichtungen (8) um mobile Sensoreinrichtungen handelt, welche zum Zwecke der Montage lösbar an der Vorrichtung (1) angeordnet werden.

11. Verfahren zum Transportieren von Behältnissen entlang eines vorgegebenen Transportpfads, wobei die Behältnisse während des Transports an Halteeinrichtungen (6) gehalten werden und mit wenigstens einer Sensoreinrichtung (8) eine Position der Halteeinrichtung (6) erfasst und/oder überwacht wird,
**dadurch gekennzeichnet, dass**
wenigstens einer und bevorzugt jeder Halteeinrichtung (6) wenigstens ein durch die wenigstens eine Sensoreinrichtung (8) erfasster Messwert zugeordnet wird.

12. Vorrichtung nach Anspruch 11,
**dadurch gekennzeichnet, dass**
die erfassten Messwerte mit bevorzugt in einer Cloud abgespeicherten Sollwerten verglichen werden.

13. Vorrichtung nach Anspruch 12,
**dadurch gekennzeichnet, dass**
bei einer Abweichung des Vergleichs eine Fehlermeldung ausgegeben wird.
